Europäisches Patentamt

European Patent Office

Office européen des brevets

(19)

(11) Numéro de publication : **0 115 993 B1**

(12) **FASCICULE DE BREVET EUROPÉEN**

(45) Date de publication du fascicule du brevet :
27.05.87

(21) Numéro de dépôt : **84400194.1**

(22) Date de dépôt : **30.01.84**

(51) Int. Cl.⁴ : **F 16 L 55/16, B 29 C 63/34**

(54) **Procédé de garnissage interne d'une conduite.**

(30) Priorité : **03.02.83 FR 8301703**

(43) Date de publication de la demande :
**15.08.84 Bulletin 84/33**

(45) Mention de la délivrance du brevet :
**27.05.87 Bulletin 87/22**

(84) Etats contractants désignés :
**AT BE CH DE GB IT LI LU NL SE**

(56) Documents cités :
**DE-A- 2 440 086**
**DE-A- 2 719 320**
**FR-A- 1 331 028**
**FR-A- 2 146 062**
**FR-A- 2 258 581**
**GB-A- 2 074 691**

(73) Titulaire : **Société COOPETANCHE**
**Rue du Bois Raffeteau**
**F-77181 Courtry (FR)**

(72) Inventeur : **Renaud, Alain**
**18, Sente du Pin**
**F-93370 Montfermeil (FR)**

(74) Mandataire : **Morash, Daniel**
**17, Avenue La Bruyère**
**F-78160 Marly-le-Roi (FR)**

### Description

La présente invention concerne un procédé de garnissage interne d'une conduite en béton, métal, céramique, etc... qui est particulièrement avantageux pour le garnissage des conduites de grand diamètre et ayant une longueur considérable, par exemple.

On connaît un procédé de garnissage interne d'une conduite du brevet britannique 2 074 691 (au nom de la demanderesse), dans lequel le garnissage est effectué au moyen d'un revêtement réalisé en un matériau composite, ledit revêtement étant appliqué, sans déformation plastique, contre la paroi interne de ladite conduite, après avoir été imprégné d'une résine thermodurcissable, par une pression fluide exercée contre la paroi intérieure dudit revêtement et maintenue jusqu'au durcissement de ladite résine, au moyen d'un système de gonflage comportant une membrane souple gonflable applicable contre ladite paroi et des moyens de chauffage introduit dans la conduite simultanément avec le revêtement et retiré après le durcissement de ladite résine. Dans ce procédé connu, on utilise un revêtement continu sur la totalité de la longueur de la conduite. Ce revêtement y est introduit ensemble avec ledit système de gonflage par traction ou équivalent. Ladite membrane, quand elle est gonflée a sensiblement la même section que le revêtement. Or, il est très difficile d'introduire par traction ou équivalent un ensemble : revêtement imprégné et système de gonflage, notamment quand il s'agit d'une conduite longue et ayant un diamètre important. Pour que ledit ensemble ne soit pas trop lourd, l'épaisseur du revêtement doit être faible ce qui le rend peu résistant et susceptible d'être endommagé sérieusement lors de son passage dans la conduite. En outre, son application contre la paroi interne de la conduite est rendue difficile par le fait qu'il faut utiliser une grande quantité d'un fluide sous pression chaud sur toute la longueur de la conduite : la pression d'application de ce fluide et sa température ont tendance à varier considérablement d'une extrémité de la conduite à son autre extrémité, étant donné le volume important de la membrane gonflée, ce qui résulte en une polymérisation irrégulière de la résine et donc une application insuffisante du revêtement contre la paroi interne de la conduite.

La demande de brevet allemand publiée N° 2 719 320 (RHEIN-PLASTIC-ROHR Gmbh) concerne spécifiquement et uniquement un procédé pour rendre étanche le joint entre deux conduites circulaires métalliques ayant, en général, un diamètre relativement faible, pour l'acheminement du gaz naturel. Selon ce procédé, un produit d'étanchéité du genre mastic est pressé contre les faces internes desdites conduites par un fluide sous pression agissant dans un espace crée entre un manchon préformé élastique dont les extrémités sont reliées fixes sur un noyau immobile ; la paroi dudit manchon subit une déformation plastique lors de l'application (directe ou indirecte par l'intermédiaire d'un manchon intérieur) dudit produit d'étanchéité. L'application sous pression s'effectue à une température élevée. L'élévation de la température s'obtient par une feuille tissée conductrice circulaire qui est placée entre deux feuilles-manchons servant d'isolation. L'ensemble feuilles-manchons et la feuille conductrice reste en place après l'application du produit d'étanchéité. La feuille conductrice est placée à l'extérieur de l'espace. Le manchon reste appliqué contre les parois intérieures des conduites par sa tension propre.

Dans cette demande de brevet allemand publiée, il s'agit uniquement de résoudre un problème d'étanchéité locale précis et non de protéger une conduite par un garnissage continu. Le produit d'étanchéité est un mastic directement appliqué par un manchon qui subit une déformation plastique. La chaleur considérable nécessaire pour l'application du mastic est créée localement par un tissu conducteur. Le procédé selon cette demande de brevet publiée ne peut donc pas servir pour le garnissage d'une conduite.

L'objet de la présente invention est de remédier à ces inconvénients et de créer un procédé de garnissage interne d'une conduite, tel qu'une conduite de grand diamètre et ayant une longueur importante, ce procédé étant efficace, facile à réaliser et permettant l'utilisation des gaines ayant une résistance importante.

Le procédé de garnissage interne d'une conduite conforme à l'invention (au moyen d'un revêtement intérieur réalisé en un matériau composite, ledit revêtement étant appliqué, sans déformation plastique, contre la paroi interne de ladite conduite, après avoir été imprégné d'une résine thermodurcissable, par une pression fluide exercée contre la paroi intérieure dudit revêtement et maintenue jusqu'au durcissement de ladite résine, au moyen d'un système de gonflage comportant une membrane souple gonflable applicable contre ladite paroi et des moyens de chauffage introduit dans la conduite simultanément avec le revêtement et retiré après le durcissement de ladite résine) est caractérisé en ce qu'un élément de revêtement d'une longueur relativement faible, en tenant compte de la longueur de la conduite est appliqué sur ladite paroi de la conduite pour le garnissage d'au moins une partie du pourtour d'un tronçon de la conduite et que des multitudes de revêtements sont posés bout à bout jusqu'à couverture complète d'au moins une partie du pourtour de la paroi intérieure de ladite conduite et en ce qu'une autre partie du pourtour de ladite paroi intérieure peut ensuite être couverte de manière identique, les joints entre les gaines étant rendus étanches.

Selon un premier mode de réalisation du procédé, le revêtement imprégné d'une résine est disposé sur la paroi extérieure d'une feuille pouvant appartenir à un système annulaire étanche gonflable, ledit système étant monté sur la paroi extérieure d'un manchon qui peut avoir une section quelconque compatible avec la section de la conduite et qui a une rigidité suffisante pour ne pas s'affaisser lorsqu'un fluide sous pression est introduit dans l'espace annulaire étanche délimité au moins partiellement par une feuille dudit système ; ledit manchon d'au moins deux roues ou analogues à chacune de ses extrémités de façon à être mobile dans la conduite sous l'effort d'une traction exercée sur l'une ou l'autre de ses extrémités ; pour l'application dudit revêtement sur la paroi intérieure de la conduite par l'action contrôlée d'un fluide sous pression, ledit fluide est introduit dans ledit système de gonflage afin de le gonfler et de le maintenir gonflé jusqu'à polymérisation au moins partielle de ladite résine, cette polymérisation étant contrôlée par l'action des moyens de chauffage électrique montés fixes au moins sur la paroi intérieure de ladite feuille dudit système ; après application du revêtement sur la paroi intérieure de ladite conduite, ledit système est dégonflé et l'ensemble mobile : manchon — système d'application gonflable est retiré de la conduite ; un autre revêtement imprégné au moins partiellement de résine est disposé sur ladite feuille délimitant ledit système dégonflé ; l'ensemble mobile : manchon — système d'application (feuille, espace) gonflable et le revêtement sont introduits dans la conduite, et l'autre revêtement est appliqué contre la paroi intérieure de la conduite, de façon à être adjacent audit premier revêtement, le joint entre le premier revêtement et ledit deuxième revêtement étant réalisé de façon étanche ; cette opération est répétée avec d'autres revêtements successifs jusqu'au garnissage complet de la conduite.

Ledit système étanche peut être réalisé sous forme d'une membrane annulaire fermée et étanche en un matériau souple où il est délimité par la paroi extérieure du manchon et par une feuille souple, dont les extrémités avant et arrière sont reliées fixes et de façon étanche à ladite paroi extérieure du manchon.

Les moyens de chauffage électrique sont réalisés sous forme de rubans chauffants connus en soi qui sont disposés à l'intérieur des chambres longitudinales créés par des bandes soudées par leurs bords latéraux aux supports tels que la paroi intérieure des membranes susmentionnées et/ou la paroi extérieure du manchon.

Plusieurs ensembles mobiles : manchon — système d'application (membrane, espace étanche) gonflable et les revêtements peuvent être disposés dans la conduite et reliés entre eux, la distance entre deux ensembles étant légèrement inférieure à la longueur d'un ensemble, le train ainsi constitué pouvant être déplacé dans la conduite après application simultanée sur la paroi intérieure de la conduite des premiers revêtements portés par lesdits ensembles mobiles : manchon — système d'application gonflable constituant le train ; les parties de la paroi intérieure de la conduite entre deux ensembles sont pourvues des revêtements. par la suite, lors d'une deuxième opération, lorsque chacun des ensembles : manchon — système d'application gonflable est chargé d'un deuxième revêtement pendant que le train est en position retirée de la conduite après l'application desdits premiers revêtements sur la paroi intérieure de la conduite.

Selon un autre mode de réalisation du procédé la conduite destinée à être pourvue d'un garnissage intérieur comprend au moins une partie ayant une action plus grande qu'au moins une autre partie, telle que dans les égouts, caractérisé en ce que le garnissage s'effectue essentiellement en plusieurs étapes :

la partie de la conduite ayant la section la plus grande est revêtue avec un matériau complexe imprégné au moins partiellement de résine et conformé de façon à pouvoir être appliqué à la partie de la paroi intérieure de la conduite devant être pourvue d'un garnissage, constituant ainsi un revêtement partiel de la conduite, ledit revêtement partiel étant posé sur au moins un système d'application gonflable disposé sur au moins un manchon dont la section est plus petite mais dont la configuration est sensiblement identique à la section de ladite partie de la conduite, ledit manchon comportant une plaque de base qui a une largeur supérieure à la plus grande largeur de la partie du manchon porteur dudit système gonflable et dudit revêtement ; au moins deux roues, roulettes ou similaires sont montées sur les bords de ladite plaque de base au moins à chaque extrémité longitudinale de la plaque rendant ainsi mobile l'ensemble : manchon — système gonflable d'application et le revêtement dans ladite partie de la conduite sous l'action d'un effort de traction dans le sens de l'axe longitudinal de la conduite, lesdites roues ou similaires étant disposées sur les décrochements entre la section la plus grande et la section la plus petite de la conduite, ces décrochements constituant des chemins de roulement ; l'application s'effectuant par l'introduction d'un fluide sous pression dans ledit système d'application en contrôlant la température dudit fluide et de la résine, les revêtements étant appliqués contre la paroi de ladite partie de la conduite par l'intermédiaire d'une feuille souple, ladite feuille pouvant faire partie d'une membrane étanche annulaire, — jusqu'à la polymérisation au moins partielle de la résine ; lorsque le revêtement est appliqué contre la paroi intérieure de ladite partie de la conduite, le système gonflable est dégonflé et l'ensemble mobile : manchon — système d'application gonflable est retiré de la conduite ; l'ensemble est chargé à nouveau avec un revêtement imprégné au moins partiellement de résine pour continuer le garnissage de ladite partie de la conduite ; ces opérations étant répétées jusqu'au garnissage complet de ladite partie de la conduite ;

La partie de la conduite ayant la section la plus petite est pourvue d'un garnissage par le procédé décrit dans le point ci-dessus ;

Les parties de la conduite non encore pourvues d'un garnissage, telles que les chemins de roulement, sont pourvues d'un revêtement qui peut être appliquée manuellement ;

Les parties des revêtements non encore appliqués contre les parois de la conduite par l'action du système gonflable peuvent être appliqués manuellement ;

Les joints entre les diverses parties des revêtements sont rendus étanches par collage, par des couvre-joints et d'autres méthodes connues en soi.

Plusieurs ensembles : manchon — système gonflable — revêtement partiel, peuvent être attelés les uns aux autres pour l'application simultanée de plusieurs revêtements partiels.

En général, ledit manchon est au moins partiellement réalisé en une matière synthétique, telle que le polyvynile et est, éventuellement, pourvu d'une armature ; il a une certaine épaisseur pour lui conférer une rigidité suffisante de façon à l'empêcher de s'affaisser, lors de l'application de la gaine contre la paroi intérieure de la conduite ; ledit manchon en matière synthétique pouvant être associé à ou être intégré dans une structure métallique, ou ledit manchon est réalisé en un matériau métallique.

D'autres avantages et caractéristiques ressortiront du texte suivant et des figures y afférentes, donnés à titre d'exemples.

La figure 1 montre, de façon schématique, en coupe longitudinale, un premier mode de réalisation de l'ensemble manchon — système d'application — revêtement introduit dans une conduite, tel qu'utilisé pour l'exécution du procédé conforme à l'invention.

La figure 2 est une coupe selon la ligne II-II de la figure 1 ;

La figure 3 montre, de façon schématique, en coupe longitudinale, un deuxième mode de réalisation dudit ensemble ;

La figure 4 est une coupe selon la ligne IV-IV de la figure 3 ;

La figure 5 montre, de façon schématique, l'utilisation d'un train d'ensembles manchon — système d'application — revêtement pour le garnissage interne d'une conduite ;

La figure 6 montre, de façon schématique, en coupe transversale, une conduite en cours d'être pourvue d'un garnissage interne qui a deux parties dont chacune a une section différente ; et

La figure 7 montre, en coupe, de façon schématique, un matériau composite pouvant être utilisé pour le garnissage interne de la conduite.

Les mêmes numéros de référence sont utilisés dans les dessins pour les éléments identiques ou semblables.

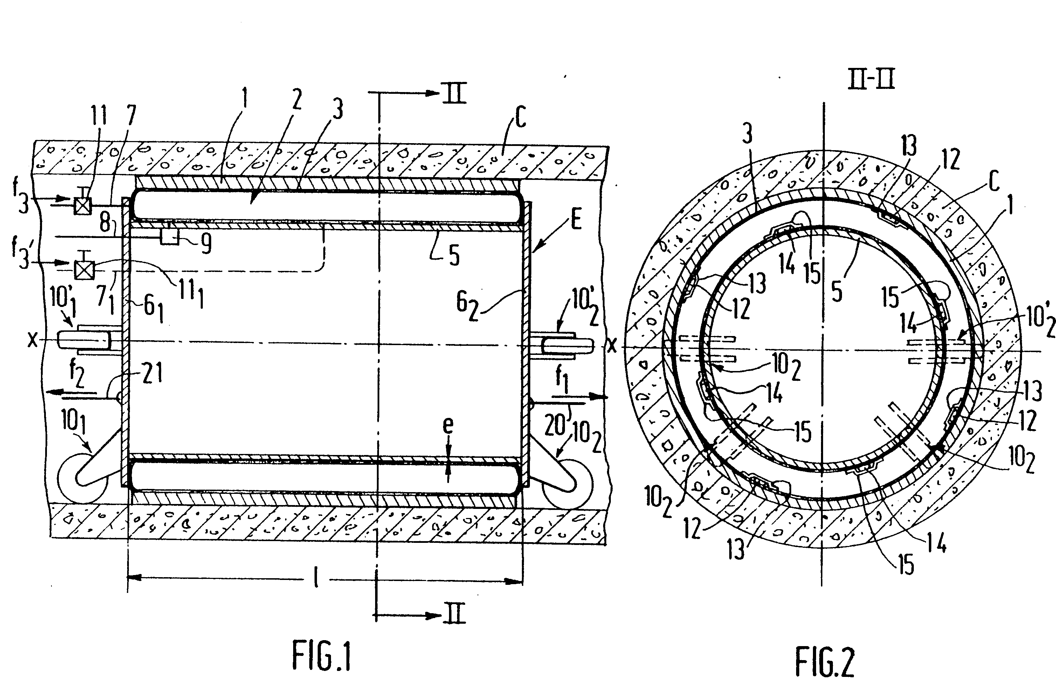

Les figures 1 et 2 montrent un premier mode de réalisation utilisant le procédé conforme à l'invention pour le garnissage interne des conduites ayant une section circulaire ; le même mode de réalisation peut être utilisé pour le garnissage des conduites ayant une section ovale, carrée, rectangulaire, polygonale, etc... La conduite (C) montrée dans les figures est en béton, mais le procédé selon l'invention peut également être utilisé pour des conduites en métal, céramique, matière synthétique, etc... Ce procédé est particulièrement avantageux pour le garnissage ayant des sections importantes, par exemple une section circulaire ayant un diamètre égal ou supérieur à 800 m/$_m$. Toutefois, ce procédé est applicable pour le garnissage de conduites de n'importe quel diamètre. Dans les figures 1 et 2, il est montré un manchon (5) en métal ou en une matière synthétique, tel que le polyvynile, éventuellement pourvu d'une armature ; la résistance mécanique et, par conséquent, l'épaisseur (e) de la paroi d'un manchon (5) en matière synthétique doit être suffisante pour que le manchon ne s'affaisse pas lorsqu'une pression est appliquée sur sa surface extérieure ; le manchon gardant, toutefois, une certaine souplesse pour pouvoir, le cas échéant, s'adapter à la courbure d'une conduite. La longueur (l) d'un manchon (5) est fonction du diamètre de la conduite (ou la grandeur de sa section) et de la configuration générale de la conduite (droite ou courbe), — le manchon étant comparativement plus court dans le cas d'une conduite courbe —, ainsi que du poids de la gaine de manchonnage (1) imprégnée au moins partiellement sur son épaisseur avec une résine époxyde, par exemple, comme il sera précisé ci-après. Dans tous les cas, la longueur totale de la conduite devant être pourvue d'un garnissage est un multiple de la longueur (l) du manchon (5). Ce manchon est, en général associé à une structure rigide, par exemple métallique, qui peut comporter des plaques pleines ou annulaires ($6_1$, $6_2$) à chacune des extrémités du manchon (5). Ladite structure (non montrée dans le dessin) et/ou les plaques ($6_1$, $6_2$) portent des dispositifs (10) porteurs de roues ou analogues qui sont en contact avec la paroi intérieure de la conduite. Dans les figures 1 et 2, deux premiers dispositifs ($10_1'$ et $10_2'$) sont disposés de côté et d'autre, dans le plan transversal de chacune des plaques ($6_1$, $6_2$), et deux deuxièmes dispositifs ($10_1$, $10_2$) sont montés sur les parties inférieures desdites plaques ($6_1$, $6_2$) à un angle de 45° avec lesdits premiers dispositifs ($10_1'$, $10_2'$). Il y a au moins quatre dispositifs ($10_1$, $10_2$) et donc quatre roues pour chaque manchon (5) comportant, éventuellement, une structure rigide et/ou des plaques ($6_1$, $6_2$) ; toutefois, le nombre de dispositifs (10) et donc des roues peut être supérieur à quatre ($10_1$, $10_2$) ou à huit ($10_1$, $10_1'$, $10_2$, $10_2'$) ; notamment, dans le cas d'un manchon (5) relativement long, des dispositifs (10) supplémentaires peuvent être montés sur le manchon ou la structure rigide à des endroits intermédiaires entre les deux extrémités dudit manchon (5). Un système (2) gonflable d'application du revêtement (1) sur la paroi intérieure de la conduite (C) est disposé sur le manchon (5). Dans le mode de réalisation montré dans les figures 1 et 2, ce système (2) est réalisé sous forme d'une membrane (30) étanche annulaire fermée qui peut être gonflée par un fluide sous pression qui peut être introduit selon la flèche ($6_3$) (ou la flèche $6_3'$) à travers les conduites (7 ou $7_1$), une vanne (11 ou $11_1$) de contrôle automatique ou manuel de l'écoulement dudit fluide étant prévue. Des moyens de chauffage électrique peuvent être disposés sur la paroi intérieure de la membrane (3), ces moyens étant alimentés via le cablage (8) et le boîtier de distribution (9). Ces moyens peuvent, par exemple, être réalisés sous forme de rubans chauffants (12, 14) connus en soi, qui sont glissés à l'intérieur de chambres pouvant être disposées dans le sens longitudinal de la membrane (3), par exemple, qui sont créés par des bandes (13, 15) en une matière synthétique reliées fixes à la paroi intérieure de la membrane (3) par collage ou par soudage (à l'air chaud, par exemple). Un revêtement (1) en un matériau composite est disposé sur ledit système (2) comme c'est montré dans les figures 1 et 2. Le matériau composite comporte une couche extérieure (il s'agit de celle qui est appliquée directement contre la paroi intérieure de la conduite (C)) en un tissu non tissé et, de préférence, une armature suivie d'une autre couche en un tissu non tissé et, éventuellement, au moins d'une autre armature et d'une couche en un tissu non tissé. Eventuellement, ledit matériau composite peut comprendre une dernière couche en un matériau synthétique souple et lisse. La figure 7 montre, à titre d'exemple, un matériau composite particulièrement avantageux car il est très souple et résistant tout en ayant un poids comparativement faible. Ce matériau consiste en une couche extérieure (70) (celle qui est appliquée directement contre la paroi intérieure de la conduite (C)) en un tissu non tissé de fibres de verre, suivi d'une armature en un tissu en fibres de verre ou un grillage en fibres de verre, la dernière couche pouvant être la couche (72) en un tissu non tissé de fibres de verre ou une couche (73) suivant la couche (72) susmentionnée ; cette couche (73) est en un matériau synthétique souple et lisse. L'épaisseur du revêtement (1) est fonction de sa résistance mécanique désirée, mais également du diamètre de la conduite (C) (grandeur de la section de la conduite (C)), la longueur du manchon, etc... En général, pour des conduites ayant un diamètre de l'ordre de 800 m/$_m$, l'épaisseur du revêtement (1) est entre 10 à 20 mm, mais pour des conduites plus importantes, l'épaisseur du revêtement (1) peut atteindre et même dépasser 45 m/$_m$.

Le garnissage interne de la conduite (C) s'effectue de la façon suivante : Le manchon (5), la structure rigide et/ou les plaques (6$_1$, 6$_2$), les dispositifs (10$_1$, 10$_2$, 10$_1$', 10$_2$' ... 10$_n$, 10$_n$') et le système (2) gonflable d'application du revêtement (1) contre la paroi intérieure de la conduite (C) constituent un ensemble (E) mobile dans la conduite (C). Cet ensemble (E) se trouve à l'extérieur de la conduite (C). Le système (2) est dégonflé. Le revêtement (1) en un matériau composite est au moins, partiellement, imprégné sur son épaisseur avec une résine époxyde, par exemple.

Si le matériau composite comprend une couche intérieure en un matériau synthétique souple et lisse, le revêtement (1) n'est imprégné avec ladite résine que sur une partie de son épaisseur, tandis que si la couche intérieure est en un tissu non tissé, le revêtement (1) peut être imprégné sur la totalité de son épaisseur. L'imprégnation peut être effectuée selon tout mode connu : injection, passage dans un bac, etc., avant que le revêtement (1) soit placé sur le système (2) ou même après. Le revêtement (1) étant relativement court, son imprégnation avec la résine est assez facile à effectuer. Il peut être avantageux de procéder au chauffage du revêtement (1) par lesdits moyens électriques pendant l'opération de son imprégnation avec la résine. Le revêtement (1) (avant ou après son imprégnation avec la résine) est posé sur le système (2) gonflable d'application de l'ensemble (E). L'ensemble (E) et le revêtement imprégné de résine sont tractés vers l'une des extrémités de la conduite (C) par un câble (20) dans le sens de la flèche (6$_1$), par exemple. Le fluide sous pression est admis dans la membrane (3) par la conduite (7 ou 7$_1$) et les moyens de chauffage électrique sont, éventuellement, mis en route — s'ils n'ont pas encore été mis en route, lors de l'imprégnation du revêtement (1). La membrane (3) gonflée par le fluide sous pression applique le revêtement (1) contre la paroi intérieure de la conduite (C). La rapide montée de la température dudit fluide et, par conséquent, de la résine permet la polymérisation rapide de celle-ci. Le système (2) est dégonflé, le chauffage arrêté et l'ensemble (E) est retiré de la conduite (C) au moyen d'un câble (21) dans le sens de la flèche (6$_2$). La polymérisation rapide de la résine est particulièrement avantageuse dans le cas de garnissage d'une conduite (C) pour l'eau potable dont la température est assez faible (en général, de l'ordre de 5 à 20 °C environ). Si, par contre, la conduite (C) est destinée pour l'écoulement d'un liquide chaud, on peut retirer l'ensemble (E) mobile aussitôt que la gaine (1) adhère à la paroi intérieure de la conduite (C), la polymérisation de la résine pouvant n'être que partielle ; en effet, c'est par la température élevée du liquide qui s'écoule dans la conduite que la polymérisation totale s'effectue après que la conduite (C) a été remise en service. Dans certains cas, on peut même obtenir une polymérisation convenable de la résine sans utiliser les moyens de chauffage électrique. Après avoir retiré l'ensemble (E) de la conduite (C), le système (2) étant dégonflé et le chauffage étant arrêté, un nouveau revêtement (1) imprégné, par exemple, est disposé sur l'ensemble (E). Celui-ci et le revêtement sont tractés vers l'une des extrémités de la conduite (C) par le câble (20) dans le sens de la flèche (f$_1$) jusqu'au premier revêtement (1) déjà appliqué contre la paroi intérieure de la conduite (C). La membrane (3) est alors gonflée, le chauffage électrique éventuellement mis en fonctionnement et le nouveau revêtement est appliqué contre la paroi intérieure de la conduite (C) de façon à être adjacent au premier revêtement déjà introduit préalablement. Lorsque le nouveau revêtement adhère à la paroi intérieure de la conduite (C) (la polymérisation de la résine étant totale ou partielle), le système (2) est dégonflé, le chauffage électrique arrêté et l'ensemble (E) retiré à nouveau de la conduite (C). Cette opération de garnissage partiel est répétée autant de fois que nécessaire jusqu'au garnissage complet de la conduite (C). Les joints entre les revêtements successifs sont rendus étanches par tout moyen connu : collage, couvre-joint, etc..., cette opération pouvant être effectuée manuellement, si nécessaire.

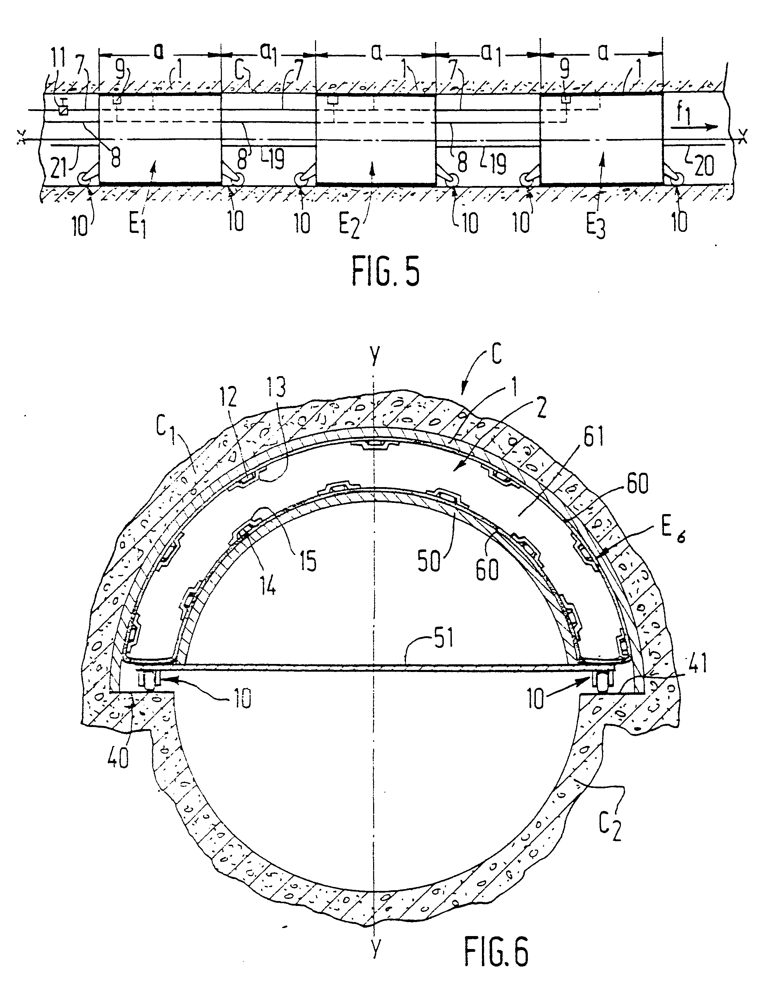

Comme c'est montré dans la figure 5, il est possible d'atteler plusieurs ensembles ($E_1$, $E_2$, $E_3$... $E_n$) au moyen de câbles (19), par exemple, pour constituer un train ; lorsque chacun desdits ensembles ($E_1$, $E_2$, $E_3$... $E_n$) est chargé d'un revêtement ($1_1$, $1_2$, $1_3$,... $1_n$), par exemple, imprégné d'une résine époxyde, le système gonflable d'application (2) de chaque ensemble étant dégonflé, le train est tracté vers l'une des extrémités de la conduite au moyen d'un câble (20) ou analogue dans le sens de la flèche ($6_1$). Le fluide sous pression est admis auxdits systèmes (2) des ensembles ($E_1$, $E_2$, $E_3$... $E_n$) par les conduites (7) munies d'au moins une vanne de contrôle (11). Le chauffage électrique est, éventuellement, mis en route par le câblage (8) dans tous les ensembles ($E_1$, $E_2$... $E_n$). Tous les revêtements ($1_1$, $1_2$, $1_3$... $1_n$) sont appliqués, simultanément, et adhèrent à la paroi intérieure de la conduite (C) en même temps. La polymérisation de la résine étant totale ou partielle, le cas échéant, les systèmes (2) sont dégonflés, le chauffage électrique est arrêté et ledit train est retiré de la conduite (C) par le câble (21) par exemple. La distance ($a_1$) entre deux ensembles (E) successifs est légèrement inférieure à la longueur (a) d'un ensemble (E). Les ensembles ($E_1$, $E_2$, $E_3$... $E_n$) sont alors à nouveau chargés avec des revêtements et le train tracté vers l'extrémité de la conduite (C) et arrêté lorsque chaque ensemble ($E_1$, $E_2$, $E_3$... $E_n$) portant un revêtement se trouve entre deux revêtements ($1_1$, $1_2$, $1_3$... $1_n$) déjà fermement et définitivement appliqués contre la paroi intérieure de la conduite (C).

Les revêtements nouvellement introduits sont alors appliqués contre la paroi intérieure de la conduite (C) en gonflant les systèmes (2) et mettant, éventuellement, le chauffage en route.

Lorsque ces revêtements nouvellement introduits adhèrent à ladite paroi de la conduite (C), les systèmes (2) sont dégonflés, le chauffage est arrêté et le train est retiré. La distance ($a_1$) entre deux ensembles (E) étant inférieure à la longueur (a) de chaque ensemble, les revêtements successifs se chevauchent légèrement et il n'existe pas de problème d'étanchéité. Ces opérations sont répétées autant de fois que nécessaire pour le garnissage de la conduite entière.

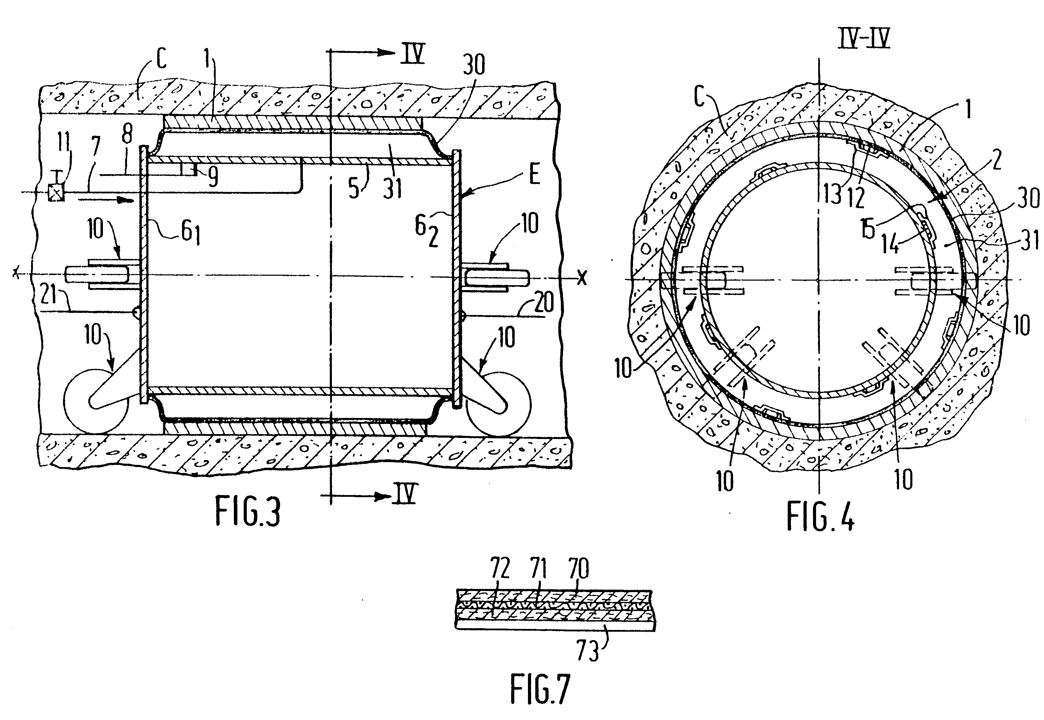

Dans le mode de réalisation montré dans les figures 3 et 4, le système (2) gonflable d'application du revêtement (1) contre ladite paroi de la conduite (C) est réalisé par une feuille (30) qui est fixée, de façon étanche, à ses extrémités longitudinales sur le manchon 5, par exemple par soudage, par collage ou par des moyens mécaniques connus en soi. Un espace (31) gonflable est ainsi créé entre la feuille (30) et la paroi extérieure du manchon (5). Des moyens électriques de chauffage (12, 13) peuvent être fixés sur la paroi intérieure de la feuille (60) et d'autres moyens de chauffage électrique (14, 15) peuvent être fixés sur la paroi extérieure du manchon (5). Il est évident que le procédé de garnissage interne d'une conduite (C) par un train comprenant plusieurs ensembles (E) est également applicable pour ce mode de réalisation.

Un mode de réalisation particulièrement intéressant est montré dans la figure 6, qui concerne le garnissage interne d'une conduite (C) dont une partie ($C_1$) a une section plus grande que l'autre partie ($C_2$). Entre la partie ayant la section la plus grande ($C_1$) et l'autre partie ($C_2$), il existe un décrochement (40), la face supérieure faisant fonction de chemin de roulement. En effet, selon le procédé conforme à l'invention, tout d'abord la partie ($C_1$) est pourvue d'un garnissage intérieur et la partie ($C_2$) par la suite. Pour le garnissage de la partie ($C_1$) de la conduite (C), on peut utiliser un premier ensemble ($E_6$) comprenant un système (2) gonflable d'application du revêtement (1) ; ce système peut, par exemple, comprendre une membrane fermée gonflable (60) qui enferme un espace (61) ; ou encore une feuille souple et étanche fixée, de façon étanche, aux extrémités du moule (demi-manchon) (50) pour permettre la création d'un espace (61) gonflable (non montré dans les dessins). Des moyens électriques de chauffage (12, 13, 14, 15) peuvent être montés fixes sur la paroi intérieure de ladite membrane (60) ; ou ces moyens de chauffage peuvent être fixés sur la paroi intérieure de ladite feuille (12, 13) et, éventuellement, sur la paroi extérieure (14, 15) du moule (50) (non montré dans les dessins). Le moule (50) est fixé sur une plaque (51) dont la largeur est supérieure à celle du moule. Au moins, deux dispositifs (10) porteurs de roues sont montés à chacune des extrémités de l'ensemble ($E_6$). Toutefois, d'autres dispositifs (10) peuvent être montés sur ladite plaque entre les deux extrémités de l'ensemble ($E_6$). Le garnissage interne de la partie ($C_1$) de la conduite (C) s'effectue, d'une manière similaire à celle décrite plus haut.

La méthode d'un train comprenant une pluralité d'ensembles ($E_6$) attelés les uns aux autres peut également être utilisée. La partie la plus petite ($C_2$) de la conduite (C) est garnie de façon similaire que la partie ($C_1$) : un moule est monté sur la plaque (51) de façon à se conformer à la forme de la partie ($C_2$) inférieure de la conduite (C). Ce moule porte un système gonflable d'application d'un revêtement, ce système étant rendu solidaire du moule de toute façon connue en soi, si nécessaire. Le revêtement, par exemple imprégné avec une résine, est disposé sur ledit système gonflable d'application, des moyens étant éventuellement prévus pour le maintenir sur ledit système de façon à ce qu'il ne puisse pas se déplacer sous l'effet d'un frottement excessif sur la paroi intérieure de la partie ($C_1$) de la conduite (C). Le procédé de garnissage interne de la partie

(C₁) de la conduite (C) est donc sensiblement le même que celui décrit ci-dessus. On peut faire adhérer aux parois intérieures de la conduite (C), les parties des revêtements non encore fermement appliquées contre les parois des parties (C₁) et (C₂) de la conduite par les systèmes gonflables d'application. Le garnissage du chemin de roulement (41) peut également être effectué manuellement.

Ce mode de réalisation est plus particulièrement applicable pour le garnissage interne des égouts. Les égouts étant chauds, il est possible de se passer au moins, partiellement, du chauffage du fluide et de la résine. Dans le dessin, les parties (C₁) et (C₂) de la conduite (C) ont des sections semi-circulaires.

Il est dans le cadre de l'invention de pouvoir effectuer le garnissage de conduites (C) ayant des parties (C₁) et (C₂) ovales, carrées, rectangulaires, polygonales, etc... étant bien entendu que les moules et les systèmes gonflables d'application ont des sections qui correspondent à celles desdites parties (C₁) et (C₂) de la conduite (C).

Les revêtements peuvent être réalisés en des matériaux composites comprenant au moins une couche en tissu non tissé en fibres naturelles ou artificielles, par exemple en polyester. Une où plusieurs armatures peuvent être prévues qui peuvent être réalisées en tout matériau naturel ou synthétique.

## Revendications

1. Procédé de garnissage interne d'une conduite (c) au moyen d'un revêtement intérieur réalisé en un matériau composite, ledit revêtement étant appliqué, sans déformation plastique, contre la paroi interne de ladite conduite, après avoir été imprégné d'une résine thermodurcissable, par une pression fluide exercée contre la paroi intérieure dudit revêtement et maintenue jusqu'au durcissement de ladite résine, au moyen d'un système de gonflage (2) comportant une membrane (3, 30, 60) souple gonflable applicable contre ladite paroi et des moyens de chauffage introduit dans la conduite simultanément avec le revêtement et retiré après le durcissement de ladite résine caractérisé en ce qu'un élément de revêtement (1) d'une longueur (a) relativement faible, en tenant compte de la longueur de la conduite est appliqué sur ladite paroi de la conduite pour le garnissage d'au moins une partie du pourtour d'un tronçon de la conduite et que des multitudes de revêtements (1) sont posés bout à bout jusqu'à couverture complète d'au moins une partie du pourtour de la paroi intérieure de ladite conduite (c) et en ce qu'une autre partie du pourtour de ladite paroi intérieure peut ensuite être couverte de manière identique, les joints entre les gaines étant rendus étanches.

2. Procédé selon la revendication 1, caractérisé en ce que le revêtement (1) imprégné d'une résine est disposé sur la paroi extérieure d'une feuille (30) pouvant appartenir à un système (2) annulaire étanche gonflable, ledit système (2) étant monté sur la paroi extérieure d'un manchon (5) qui peut avoir une section quelconque compatible avec la section de la conduite (c) et qui a une rigidité suffisante pour ne pas s'affaisser lorsqu'un fluide sous pression est introduit dans l'espace annulaire étanche délimité au moins partiellement par une feuille dudit système ; ledit manchon (5) est pourvu d'au moins deux roues (10) ou analogues à chacune de ses extrémités de façon à être mobile dans la conduite sous l'effort d'une traction exercée sur l'une ou l'autre de ses extrémités ; pour l'application dudit revêtement sur la paroi intérieure de la conduite (c) par l'action contrôlée d'un fluide sous pression, ledit fluide est introduit dans ledit système (2) de gonflage afin de le gonfler et de le maintenir gonflé jusqu'à polymérisation au moins partielle de ladite résine, cette polymérisation étant contrôlée par l'action des moyens (12, 14) de chauffage électrique montés fixes au moins sur la paroi intérieure de ladite feuille (30) dudit système (2) ; après application du revêtement (1) sur la paroi intérieure de ladite conduite (c), ledit système (2) est dégonflé et l'ensemble mobile : manchon (5) — système (2) d'application gonflable est retiré de la conduite ; un autre revêtement (1) imprégné au moins partiellement de résine est disposé sur ladite feuille (30) délimitant ledit système dégonflé ; l'ensemble (E) mobile : manchon (5) — système d'application (2) (feuille, espace) gonflable et le revêtement sont introduits dans la conduite et l'autre revêtement est appliqué contre la paroi intérieure de la conduite, de façon à être adjacent audit premier revêtement, le joint entre le premier revêtement et ledit deuxième revêtement étant réalisé de façon étanche ; cette opération est répétée avec d'autres revêtements successifs jusqu'au garnissage complet de la conduite.

3. Procédé selon la revendication 2, caractérisé en ce que ledit système (2) étanche est réalisé sous forme d'une membrane annulaire fermée et étanche en un matériau souple.

4. Procédé selon la revendication 2, caractérisé en ce que ledit système étanche gonflable est délimité par la paroi extérieure du manchon et par une feuille souple, dont les extrémités avant et arrière sont reliées fixes et de façon étanche à ladite paroi extérieure du manchon.

5. Procédé selon l'une des revendications précédentes, caractérisé en ce que les moyens (12, 14) de chauffage électrique sont réalisés sous forme de rubans chauffants connus en soi qui sont disposés à l'intérieur des chambres longitudinales créées par des bandes soudées (13, 15) par leurs bords latéraux aux supports tels que la paroi intérieure des membranes (30) susmentionnées et/ou la paroi extérieure du manchon (5).

6. Procédé selon l'une des revendications précédentes, caractérisé en ce que plusieurs ensembles (E) mobiles : manchon (5) — système (2) d'application (membrane, espace étanche) gonflable et les revêtements (1) sont disposés dans la conduite (c) et reliés entre eux, la distance (a₁) entre deux ensembles (E₁E₂) étant légèrement

inférieure à la longueur (a) d'un ensemble (E), le train ainsi constitué pouvant être déplacé dans la conduite après application simultanée sur la paroi intérieure de la conduite des premiers revêtements (1) portés par lesdits ensembles $(E_1E_2E_3)$ mobiles : manchon (5) — système (2) d'application gonflable constituant le train ; les parties de la paroi intérieure de la conduite (c) entre deux ensembles (E) ayant des longueurs $(a_1)$ sont pourvues des revêtements (1), par la suite, lors d'une deuxième opération, lorsque chacun des ensembles (E) : manchon (5) — système (2) d'application gonflable est chargé d'un deuxième revêtement (1) pendant que le train est en position retirée de la conduite après l'application desdits premiers revêtements (1) sur la paroi intérieure de la conduite (c).

7. Procédé selon l'une des revendications précédentes, dans lequel la conduite (c) destinée à être pourvue d'un garnissage intérieur comprend au moins une partie (c) ayant une action plus grande qu'au moins une autre partie $(c_2)$, telle que dans les égouts, caractérisé en ce que le garnissage s'effectue essentiellement en plusieurs étapes :

i) la partie $(c_1)$ de la conduite ayant la section la plus grande est revêtue avec un matériau complexe imprégné au moins partiellement de résine et conformé de façon à pouvoir être appliqué à la partie de la paroi intérieure de la conduite (c) devant être pourvue d'un garnissage, constituant ainsi un revêtement (1) partiel de la conduite, ledit revêtement (1) partiel étant posé sur au moins un système (2) d'application gonflable disposé sur au moins un manchon (50) dont la section est plus petite mais dont la configuration est sensiblement identique à la section de ladite partie $(c_1)$ de la conduite (c), ledit manchon (50) comportant une plaque de base (51) qui a une largeur supérieure à la plus grande largeur de la partie du manchon porteur dudit système gonflable et dudit revêtement ; au moins deux roues (10), roulettes ou similaires sont montées sur les bords de ladite plaque de base (51) au moins à chaque extrémité longitudinale de la plaque rendant ainsi mobile l'ensemble : manchon (50) — système (2) gonflable d'application et le revêtement (1) dans ladite partie $(c_1)$ de la conduite sous l'action d'un effort de traction dans le sens de l'axe longitudinal de la conduite, lesdites roues (10) ou similaires étant disposées sur les décrochements (41) entre la section la plus grande $(c_1)$ et la section la plus petite $(c_2)$ de la conduite (c), ces décrochements (41) constituant des chemins de roulement ; l'application s'effectuant par l'introduction d'un fluide sous pression dans ledit système (2) d'application en contrôlant la température dudit fluide et de la résine, les revêtements (1) étant appliqués contre la paroi de ladite partie de la conduite par l'intermédiaire d'une feuille souple (60), ladite feuille (60) pouvant faire partie d'une membrane étanche annulaire. — jusqu'à la polymérisation au moins partielle de la résine ; lorsque le revêtement est appliqué contre la paroi intérieure de ladite partie $(c_1)$ de la

conduite (c), le système (2) gonflable est dégonflé et l'ensemble mobile : manchon (50) — système (2) d'application gonflable est retiré de la conduite ; l'ensemble est chargé à nouveau avec un revêtement (1) imprégné au moins partiellement de résine pour continuer le garnissage de ladite partie $(c_1)$ de la conduite (c) ; ces opérations étant répétées jusqu'au garnissage complet de ladite partie de la conduite ;

ii) La partie $(c_2)$ de la conduite ayant la section la plus petite est pourvue d'un garnissage par le procédé décrit dans le point (i) ci-dessus ;

iii) Les parties de la conduite non encore pourvues d'un garnissage, telles que les chemins de roulement (41), sont pourvues d'un revêtement qui peut être appliqué manuellement ;

iv) Les parties des revêtements non encore appliqués contre les parois de la conduite par l'action du système gonflable peuvent être appliqués manuellement ;

v) Les joints entre les diverses parties des revêtements sont rendus étanches par collage, par des couvre-joints et d'autres méthodes connues en soi.

8. Procédé selon la revendication 7, caractérisé en ce que plusieurs ensembles (E) : manchon (50) — système (2) gonflable — revêtement (1) partiel, peuvent être attelés les uns aux autres pour l'application simultanée de plusieurs revêtements partiels.

9. Procédé selon l'une des revendications précédentes, caractérisé en ce que, en général, ledit manchon (5, 50) est au moins partiellement réalisé en une matière synthétique, telle que le polyvynile et est, éventuellement, pourvu d'une armature ; il a une épaisseur (e) pour lui conférer une rigidité suffisante de façon à l'empêcher de s'affaisser, lors de l'application de la gaine contre la paroi intérieure de la conduite ; ledit manchon en matière synthétique pouvant être associé à ou être intégré dans une structure métallique.

10. Procédé selon l'une des revendications 1 à 9, caractérisé en ce que ledit manchon (5,50) est réalisé en un matériau métallique.

**Claims**

1. A process for the internal coating of a pipe (c) by means of an inner lining formed from a composite material, said lining being applied without plastic deformation against the internal wall of said pipe after being impregnated with a heat hardenable resin, by a fluid pressure exerted against the inner wall of said lining and maintained until said resin has hardened, by means of an inflation system (2) comprising an inflatable flexible membrane (3, 30, 60) applicable against said wall and heating means introduced into the pipe simultaneously with the lining and withdrawn after hardening of said resin, characterized in that a lining element (1) of a relatively small length (a), considering the length of the pipe, is applied against said wall of the pipe for coating at least a part of the periphery of a section of the pipe and that multitudes of linings (1) are laid end to end until at least a part of the periphery of the internal wall of said pipe (c) is completely covered and in that another part of the periphery of said inner wall may then be covered in an identical manner, the joints between the sheaths being sealed.

2. Process according to claim 1, characterized in that the resin impregnated lining (1) is disposed on the outer wall of a sheet (30) which may belong to an inflatable sealing annular system (2), said system (2) being mounted on the outer wall of a sleeve (5) which may have any section compatible with the section of the pipe (c) and which has sufficient rigidity so as not to collapse when a pressurized fluid is introduced into the sealed annular space defined at least partially by a sheet of said system ; said sleeve (5) is provided with at least two wheels (10) or similar at each of its ends so as to be immobile in the pipe under a tractive force exerted on one or the other of its ends ; for application of the lining to the inner wall of the pipe (c) by the controlled action of the pressurized fluid, said fluid is introduced into said inflation system (2) so as to inflate it and so as to maintain it inflated until at least partial polymerization of said resin, this polymerization being controlled by the action of electric heating means (12, 14) fixedly mounted at least on the inner wall of said sheet (30) of said system (2) ; after application of the lining (1) on the inner wall of said pipe (c) said system (2) is deflated and the mobile assembly : sleeve (5) — inflatable application system (2) is withdrawn from the pipe ; another lining (1) impregnated at least partially with resin is disposed on said sheet (30) defining said deflated system ; the mobile assembly (E) : sleeve (5) — inflatable application system (2) (sheet, space) and the lining are introduced into the pipe and the other lining is applied against the inner wall of the pipe, so as to be adjacent said first lining, the joint between the first lining and the second lining being formed sealingly ; this operation is repeated with other successive linings until the pipe is completely coated.

3. Process according to claim 2, characterized in that said sealed system (2) is in the form of a closed and sealed annular membrane made from a flexible material.

4. Process according to claim 2, characterized in that said inflatable sealing system is defined by the outer wall of the sleeve and by a flexible sheet whose front and rear ends are joined fixedly and sealingly to said outer wall of the sleeve.

5. Process according to one of the preceding claims, characterized in that the electric heating means (12, 14) are in the form of heating ribbons known per se which are disposed inside longitudinal chambers created by strips (13, 15) welded by their side edges to supports such as the inner wall of the above mentioned membranes (30) and/or the outer wall of the sleeve (5).

6. Process according to one of the preceding claims, characterized in that several mobile assemblies (E) : sleeve (5) — inflatable application system (2) (membrane, sealed space) and the linings (1) are disposed in the pipe (c) and connected together, the distance ($a_1$) between two assemblies ($E_1 E_2$) being slightly less than the length (a) of an assembly (E), the train thus formed being able to be moved in the pipe after simultaneous application on the inner wall of the pipe of the first linings (1) carried by said mobile assemblies ($E_1 E_2 E_3$) : sleeve (5) — inflatable application system (2) forming the train ; the parts of the inner wall of the pipe (c) between two assemblies (E) having lengths ($a_1$) are provided with linings (1), subsequently, during a second operation when each of the assemblies (E) : sleeve (5) — inflatable application system (2) is provided with a second lining (1) while the train is in a position withdrawn from the pipe after application of said first linings (1) on the inner wall of the pipe (c).

7. Process according to one of the preceding claims, in which the pipe (c) intended to be provided with an inner coating comprises at least one part (c) having an action greater than at least another part ($c_2$), such as in sewers, characterized in that the coating is carried out essentially in several steps :

i) the part ($c_1$) of the pipe having the largest section is lined with a complex material impregnated at least partially with resin and shaped so as to be able to applied to the part of the inner wall of the pipe (c) to be provided with a coating, thus forming a partial lining (1) of the pipe, said partial lining (1) being laid on at least one inflatable application system (2) disposed on at least one sleeve (50) whose section is smaller but whose configuration is substantially identical to the section of said part ($c_1$) of the pipe (c), said sleeve (50) comprising a base plate (51) which has a width greater than the largest width of the part of the sleeve carrying said inflatable system and said lining ; at least two wheels (10), rollers or similar are mounted on the edges of said base plate (51) at least at each longitudinal end of the plate thus making the assembly : sleeve (50) — inflatable application system (2) and the lining (1) mobile in said part ($c_1$) of the pipe under the action of a tractive force in the direction of the longitudinal axis of the pipe, said wheels (10) or similar being disposed on the recesses (41) between the largest section ($c_1$) and the smallest section ($c_2$) of the pipe (c), these recesses (41) forming rolling tracks ; the application taking place by introducing a pressurized fluid into said application system (2) by controlling the temperature of said fluid and of the resin, the linings (1) being applied against a wall of said part of the pipe by means of a flexible sheet (60), said sheet (60) being able to form part of an annular sealing membrane — until at least partial polymerization of the resin ; when the lining is applied against the inner wall of said part ($c_1$) of the pipe (c) ; the inflatable system (2) is deflated and the mobile assembly : sleeve (50) — inflatable application system (2) is withdrawn from the pipe ; the assembly is again loaded with a lining (1) at least partially impregnated with resin for continuing the coating of said part (c₁) of the pipe (c) ; these operations being repeated until said part of the pipe is completely coated ;

ii) the part ($c_2$) of the pipe having the smallest section is provided with a coating by the process described under item (i) above ;

iii) the parts of the pipe not yet provided with a coating, such as the rolling tracks (41) are provided with a lining which may be applied manually ;

iv) the parts of the linings not yet applied against the walls of the pipe by the action of the inflatable system may be applied manually ;

v) the joints between the different parts of the linings are sealed by bonding by means of but straps and other methods known per se.

8. Process according to claim 7, characterized in that several assemblies (E) : sleeve (50) — inflatable system (2) — partial lining (1) may be hitched to one another for simultaneous application of several partial linings.

9. Process according to one of the preceding claims, characterized in that in general said sleeve (5, 50) is at least partially made from a synthetic material, such as polyvinyl and is possibly provided with a framework ; it has a thickness (e) conferring thereon sufficient rigidity so as to prevent it from collapsing during application of the sheath against the inner wall of the pipe ; said synthetic material sleeve being possible associated with or being integrated in a metal structure.

10. Process according to one of claims 1 to 9, characterized in that said sleeve (5, 50) is made from a metal material.

**Patentansprüche**

1. Verfahren zum innenseitigen Beschichten eines Rohres (c) mittels einer Innenauskleidung aus einem Verbundmaterial, wobei die Auskleidung ohne plastische Verformung gegen die Innenwand des Rohres aufgebracht ist, nach Imprägnieren mit einem in der Wärme härtbaren Harz, durch einen gegen die Innenwandung dieser Auskleidung ausgeübten Fluiddruck, der bis zum Härten dieses Harzes aufrechtgehalten wird, mittels eines Blähsystems (2) mit einer nachgiebigen aufblähbaren Membran (3, 30, 60), die gegen diese Wandung anpreßbar ist und mit Heizeinrichtungen, die in die Leitung gleichzeitig mit der Auskleidung eingeführt werden und die nach dem Härten dieses Harzes herausgezogen werden, dadurch gekennzeichnet, daß ein Auskleidungselement (1) mit einer relativ geringen Länge (a) unter Berücksichtigung der Länge des Rohres auf die Wandung des Rohres zur Innenbeschichtung wenigstens eines Teils des Umfangs eines Abschnitts des Rohres aufgebracht wird und daß eine Vielzahl von Auskleidungen (1) stirnseitig nebeneinander bis zur völligen Überdeckung wenigstens eines Teils des Umfangs der Innenwandung dieser Leitung (c) eingesetzt werden und daß ein anderer Teil des Umfangs dieser Innenleitung dann in gleicher Weise bedeckt werden kann, wobei die Stoßstellen zwischen den Hüllen abgedichtet werden.

2. Verfahren nach Anspruch 1, dadurch gekennzeichnet, daß die mit einem Harz imprägnierte Auskleidung ⁻ (1) auf der Außenwandung einer Folie (30), die zu einem dichten blähbaren Ringsystem (2) gehören kann, angeordnet wird, wobei dieses System (2) auf der Außenwandung einer Muffe (5) gelagert wird, die einen beliebigen Querschnitt haben kann, der mit dem Querschnitt der Leitung (c) kompatibel und von ausreichender Steifigkeit ist, um nicht auszuweichen, wenn ein Fluid unter Druck in den dichten Ringraum eingeführt wird, der wenigstens teilweise durch eine Folie dieses Systems begrenzt ist ; daß diese Muffe (5) mit wenigstens zwei Rädern (10) oder der gleichen an jedem ihrer Enden derart versehen ist, daß sie in der Leitung unter dem Einfluß einer Zugkraft beweglich ist, die auf das eine oder andere ihrer Enden ausgeübt wird ; daß zum Anpressen dieser Auskleidung auf die Innenwandung des Rohres (c) durch die geregelte Wirkung eines Fluids unter Druck, dieses Fluid in dieses Blähsystem (2) eingeführt wird, um es zu blähen und es bis zur wenigstens teilweisen Polymerisation dieses Harzes gebläht zu halten, wobei diese Polymerisation durch die Wirkung der elektrischen Heizeinrichtungen (12, 14) geregelt ist, welche fest wenigstens auf der Innenwandung dieser Folie (30) dieses Systems (2) angebracht sind ; daß nach Beaufschlagen der Auskleidung (1) gegen die Innenwandung dieses Rohres (c) dieses System (2) entbläht wird und daß die bewegliche Anordnung bestehend aus Muffe (5) und blähbarem Anpreßsystem (2) aus der Leitung herausgezogen wird ; daß eine andere wenigstens teilweise mit Harz imprägnierte Auskleidung (1) auf dieser Folie (30), die dieses entblähte System begrenzt, angeordnet ist ; daß die aus Muffe (5) blähbare Beaufschlagungssystem (2) (Folie, Raum) bestehende bewegliche Anordnung (E) sowie die Auskleidung in das Rohr eingeführt werden und daß die andere Auskleidung gegen die Innenwandung der Leitung derart gepreßt wird, daß sie benachbart dieser ersten Auskleidung ist, wobei die Stoß- oder Verbindungsstelle zwischen der ersten Auskleidung und der zweiten Auskleidung abgedichtet wird ; und daß dieser Vorgang mit anderen aufeinanderfolgenden Auskleidungen bis zur vollständigen Auskleidung der Leitung wiederholt wird.

3. Verfahren nach Anspruch 2, dadurch gekennzeichnet, daß dieses dichte System (2) in Form einer geschlossenen und dichten Ringmembran aus nachgiebigem Material hergestellt wird.

4. Verfahren nach Anspruch 2, dadurch gekennzeichnet, daß dieses dichte blähbare System begrenzt wird durch die Außenwandung der Muffe und durch eine nachgiebige Folie, deren vordere und hintere Enden fest und dicht mit dieser Außenwandung der Muffe verbunden sind.

5. Verfahren nach einem der vorhergehenden Ansprüche, dadurch gekennzeichnet, daß die elektrischen Heizeinrichtungen (12, 14) in Form von an sich bekannten heizenden Bändern hergestellt sind, die im Inneren der Längskammern angeordnet sind, welche durch Bänder erzeugt wurden, die mit ihren seitlichen Rändern (13, 15) an die Träger wie die Innenwandung der oben genannten Membranen (30) und/oder die Außenwandung der Muffe (5) geschweißt sind.

6. Verfahren nach einem der vorhergehenden Ansprüche, dadurch gekennzeichnet, daß mehrere bewegliche Anordnungen (E) bestehend aus Muffe (5) und blähbarem Beaufschlagungssystem (2) (Membran, dichter Raum) sowie die Auskleidungen (1) in dem Rohr (c) angeordnet und miteinander verbunden sind, wobei die Entfernung ($a_1$) zwischen zwei Anordnungen ($E_1E_2$) geringfügig kleiner als die Länge (a) einer Anordnung (E) ist, wobei der so gebildete Zug im Rohr verschiebbar ist, nachdem gleichzeitig gegen die Innenwandung des Rohres erste Auskleidungen (1) angebracht wurden, welche durch diese beweglichen Anordnungen ($E_1E_2E_3$) bestehend aus Muffe (5) und blähbarem Beaufschlagungssystem, das den Zug bildet, getragen sind ; daß die Teile der Innenwandung des Rohres (c) zwischen zwei Anordnungen (E) mit Längen ($a_1$) mit Auskleidungen (1) versehen sind, wobei anschließend bei einem zweiten Vorgang, wenn jede Anordnung (E), bestehend aus Muffe (5) und blähbarem Beaufschlagungssystem, mit einer zweiten Auskleidung (1) versehen wird, während der Zug sich in aus dem Rohr herausgezogener Stellung nach Aufbringen dieser ersten Auskleidungen (1) gegen die Innenwandung des Rohres (c) befindet.

7. Verfahren nach einem der vorhergehenden Ansprüche, wobei das mit einer Innenauskleidung zu versehende Rohr (c) wenigstens einen Teil ($c_1$) mit einer größeren Wirkung als wenigstens ein anderer Teil ($c_2$), beispielsweise in Abwasserleitungen, umfaßt, dadurch gekennzeichnet, daß das Auskleiden im wesentlichen in folgenden Schritten vor sich geht :

i) der Teil ($c_1$) des Rohrs mit dem größten Querschnitt wird mit einem komplexen Material ausgekleidet, das wenigstens zum Teil mit Harz imprägniert und derart geformt ist, daß es gegen den Teil der Innenwandung des Rohres (c) gepreßt werden kann, der mit einer Auskleidung versehen werden soll und so eine Teilauskleidung (1) des Rohres bildet, wobei die Teilauskleidung (1) auf wenigstens ein blähbares Beaufschlagungssystem gelegt wird, das auf wenigstens einer Muffe (50) angeordnet wird, deren Querschnitt kleiner ist, die jedoch von im wesentlichen identischer Gestalt wie der Querschnitt des Teiles ($c_1$) des Rohres (c) ist, wobei die Muffe (50) eine Grundplatte (51) mit einer Breite größer als die größte Breite der Trägermuffe dieses aufblähbaren Systems und dieser Auskleidung aufweist ; daß wenigstens zwei Räder (10), Rädchen, Rollen oder dergleichen auf den Rändern der Grundplatte (51) wenigstens an jedem Längsende der Platte gelagert sind und so die Anordnung, bestehend aus dem blähbaren Muffen (50) — Beaufschlagungssystem (2) sowie der Auskleidung (1) in dem Teil ($c_1$) des Rohres unter der Wirkung einer Zugkraft in Richtung der Längsachse des Rohres beweglich ist, wobei diese Räder (10) oder dergleichen auf Absätzen (41) zwischen dem größten Querschnitt ($c_1$) und dem kleinsten Querschnitt ($c_2$) des Rohres (c) angeordnet sind, wobei diese Absätze (41) Rollbahnen bilden ; das Anpressen bzw. die Beaufschlagung erfolgt durch Einführen eines Fluids unter Druck in dieses Beaufschlagungssystem (2) unter Regeln der Temperatur dieses Fluids sowie die des Harzes ; Auskleidungen (1) werden gegen die Wandung dieses Teils des Rohres vermittels einer nachgiebigen Folie (60) gepreßt ; diese Folie (60) kann Teil einer dichten ringförmigen Membran sein, und zwar bis die wenigstens teilweise Polymerisation des Harzes erfolgt ist ; wenn die Auskleidung gegen die Innenwandung des Teils ($c_1$) des Rohres (c) gedrückt ist, wird das blähbare System (2) entbläht und die bewegliche Anordnung aus Muffe (50) und blähbarem Beaufschlagungssystem (2) wird aus der Leitung herausgezogen ; die Anordnung wird von neuem mit einer Auskleidung (1) beladen, die wenigstens teilweise mit Harz imprägniert ist, um das Auskleiden des Teils ($c_1$) des Rohres (c) fortzusetzen ; diese Vorgänge werden bis zum vollständigen Auskleiden dieses Teils des Rohres wiederholt ;

ii) der Teil ($c_2$) der Leitung mit dem kleinsten Querschnitt ist mit einer Auskleidung nach dem oben unter Punkt (i) beschriebenen Verfahren versehen ;

iii) die noch nicht mit einer Auskleidung versehenen Teile des Rohres wie die Rollbahnen (41) werden mit einem Überzug, der von Hand aufgebracht wird, versehen ;

iv) die noch nicht gegen die Wandungen des Rohres aufgrund der Wirkung des blähbaren Systems gepreßten Teile der Auskleidungen können von Hand aufgebracht oder angepreßt werden ; und

v) die Verbindungen oder Stoßstellen zwischen den verschiedenen Teilen der Auskleidungen werden durch Verkleben, durch Verbindungskaschierungen und andere an sich bekannte Verfahren dicht gemacht.

8. Verfahren nach Anspruch 7, dadurch gekennzeichnet, daß mehrere Anordnungen (E), bestehend aus Muffe (50), blähbarem System (2) und Teilauskleidung (1) miteinander durch gleichzeitiges Aufbringen mehrerer Teilüberzüge gekoppelt werden.

9. Verfahren nach einem der vorhergehenden Ansprüche, dadurch gekennzeichnet, daß allgemein diese Muffe (5, 50) wenigstens teilweise aus einem synthetischen Material wie Polyvinyl hergestellt und gegebenenfalls mit einer Bewehrung versehen wird ; daß sie eine Dicke (e) hat, die ihr eine ausreichende Steifigkeit verleiht, derart, daß verhindert wird, daß sie ausweicht, wenn die Hülle gegen die Innenwandung des Rohres gepreßt wird ; wobei die Muffe aus synthetischem Material einer solchen metallischen Konstruktion zugeordnet oder in diese integriert werden kann.

10. Verfahren nach einem der Ansprüche 1 bis 9, dadurch gekennzeichnet, daß die Muffe (5, 50) aus einem metallischen Material hergestellt wird.

FIG.1                    FIG.2

0 115 993

FIG.3

FIG.4

FIG.7

IV-IV

0 115 993

FIG. 5

FIG.6